# EUROPÄISCHE PATENTSCHRIFT

(11) **EP 2 755 784 B1**
(45) Veröffentlichungstag und Bekanntmachung des Hinweises auf die Patenterteilung: **03.08.2016**
(21) Anmeldenummer: 12753910.4
(22) Anmeldetag: 30.08.2012
(51) Int. Cl.: B23B 5/36, B23Q 27/00

(54) **WERKZEUGBAUGRUPPE FÜR EINE DREHVORRICHTUNG**
TOOL ASSEMBLY FOR A ROTATING DEVICE
MODULE D'OUTILS DESTINÉ À UN DISPOSITIF DE TOURNAGE

(30) Priorität: 16.09.2011 DE 102011113385
(43) Veröffentlichungstag der Anmeldung: 23.07.2014
(73) Patentinhaber: IPROTEC Maschinen- und Edelstahlprodukte GmbH, 32469 Petershagen-Friedewalde (DE)
(72) Erfinder: KOCHSIEK Adolf, 33818 Leopoldshöhe (DE)
(74) Vertreter: Wanischeck-Bergmann, Axel
(86) Internationale Anmeldenummer: PCT/EP2012/003632
(87) Internationale Veröffentlichungsnummer: WO 2013/037459

(56) Entgegenhaltungen:
- DE-A1- 2 720 103

## Beschreibung

Die vorliegende Erfindung betrifft eine Werkzeugbaugruppe für eine Drehvorrichtung gemäss dem Oberbegriff des Patentanspruch 1. Ein derartiges Gerät ist aus der DE 27 20 103 A1 bekannt.

Das Drehen von Werkstücken zur Herstellung runder Erzeugnisse ist seit langem bekannt und eine Standardbearbeitungsmethode. Ein Werkstück wird in der Regel eingespannt und rotiert um eine Drehachse. Ein Schneidwerkzeug wird radial an das rotierende Werkstück herangeführt und erzeugt dort in einem spanabhebenden Verfahren einen Schnitt, beispielsweise eine Nut. Durch entsprechende radiale und axiale Führung des Werkzeugs kann auch eine entsprechende Kontur in das Werkstück gedreht werden. Dabei ergibt sich grundsätzlich eine rotationssymmetrische runde Kontur.

Im Stand der Technik ist es auch bekannt, sogenannte Unrundkonturen durch Drehen zu erzeugen. Zu diesem Zweck wird ein um das drehende Werkstück drehender Halter für das Schneidwerkzeug verwendet. Die beiden Drehungen werden aufeinander abgestimmt, so dass gesteuert Schneidkräfte zur Wirkung kommen und eine auch nicht runde Kontur erzeugen können.

Abgesehen davon, dass die ebenfalls um eine Achse rotierenden Werkzeuge einerseits einen erheblichen maschinellen Aufwand mit sich bringen, haben sie vor allem den Nachteil, dass sie vorrangig im Endbereich eines Werkstücks zum Einsatz kommen, da sie nicht in eine beliebige axiale Position vorgefahren werden können.

Eine stößelartige Führung eines Schneidwerkzeuges hat sich als höchst problematisch erwiesen. Um industriell nacharbeitbare Konturen garantieren zu können, muss eine extrem aufwändige Programmierung erfolgen, da praktisch zu jedem Zeitpunkt der Werkzeugort programmiert sein muss. Auch braucht man eine hochdynamische Achse, da sehr schnelle Bewegungen auszuführen sind, die auch eine Impulsentkopplung erforderlich machen können. Andererseits treten extrem hohe Kräfte auf, für die eine derartige Stößelführung nicht ausgelegt ist. Eine Anpassung an alle Werkstücke ist damit überaus aufwändig und es können auch nicht alle Werkstücke bearbeitet werden. Eine Innenbearbeitung ist schwierig. Darüber hinaus ist die Werkzeugvielfalt reduziert.

Ausgehend von diesem Stand der Technik liegt der vorliegenden Erfindung die Aufgabe zugrunde, eine Vorrichtung zum Unrunddrehen bereitzustellen, welche mit geringem technischen und maschinellen Aufwand erstellt werden kann und gleichwohl in nahezu beliebigen axialen Positionen eines Werkstückes zum Einsatz kommen kann.

Zur technischen Lösung dieser Aufgabe wird ein Werkzeugträger mit den Merkmalen des Patentanspruches 1 vorgeschlagen. Weitere Vorteile und Merkmale ergeben sich aus den Unteransprüchen.

Erfindungsgemäß wird ein Werkzeugträger vorgeschlagen, der einen Trägerkörper aufweist, der während eines Drehvorgangs während einer Umdrehung des Werkstückes entlang einer Bahn bewegbar ist. Dabei ist die Bewegung eine konturfolgende Bewegung, das heißt, der Werkzeugträger geht mit dem daran angeordneten Schneidwerkzeug mit einer vorgegebenen Frequenz auf einer Bahn in Richtung der Drehachse des Werkzeugs hin und her. Diese Bewegung ist gesteuert und auf die Drehzahl des Werkstücks so abgestimmt, dass an dem Werkstück jeweils am richtigen Rotationspunkt die gewünschten Schneidkräfte erzeugt werden. Auf diese Weise können an einer nahezu beliebigen axialen Position eines Werkstücks nahezu beliebige unrunde Konturen erzeugt werden. Auch in axialer Richtung können gewünschte Konturverläufe erzeugt werden.

Gemäß einem vorteilhaften Vorschlag der Erfindung befindet sich der Trägerkörper direkt oder indirekt auf einem Schlitten, der eine radiale und/oder axiale Bewegung des Trägerkörpers zulässt. Auch kann der Trägerkörper um eine Drehachse gelagert und im Wesentlichen scheibenförmig ausgebildet sein. Der Trägerkörper in Form eines Scheibensegmentes dreht um eine zur Drehachse des Werkstücks im Wesentlichen parallel liegende Drehachse und wird um diese hin und her bewegt, um die gewünschte Kontur zu erzeugen. Der Trägerkörper kann auch als Hebel ausgebildet sein.

Der Trägerkörper kann seinerseits auf einem um wenigstens eine Achse dreh- oder schwenkbaren Trägerelement bewegbar gelagert sein. So können Bearbeitungen sogar auch von im Winkel zur Drehachse gelagerten Planflächen durchgeführt werden.

Zur Erzeugung einer entsprechenden Bewegung ist der Trägerkörper über einen Exzenter-Antrieb bewegbar. Der Exzenterantrieb kann auf einfache Weise gesteuert sein und somit die gewünschte Bewegung erzeugen. Dazu wird er zu der Werkstückdrehzahl im Verhältnis eingestellt.

Mit der Erfindung wird eine Werkzeugbaugruppe für eine Drehvorrichtung vorgeschlagen.

Wie bereits einleitend ausgeführt wurde, werden Drehvorrichtungen verwendet, um eine spanende Bearbeitung an einem drehenden Werkstück durchzuführen. Es ist bekannt, das Werkstück in eine entsprechende Spindeleinheit einzuspannen und mittels eines Antriebes in Drehung um eine Drehachse zu versetzen. Üblicherweise werden hohe Schnittgeschwindigkeiten eingestellt. Ein Schneidwerkzeug wird an der gewünschten Stelle an das drehende Werkzeug herangeführt. Mit herkömmlichen Drehvorrichtungen kann das Werkzeug hinsichtlich des axialen Ortes positioniert werden. Bei Aufbringen einer Kraft wird dann eine runde Kontur gedreht. Bei den im Stand der Technik auch bekannten Unrunddrehvorrichtungen wird die Kraft und/oder die Berührung zwischen Werkzeug und Werkstück gesteuert, so dass auch über radiale Teilstrecken des Werkstückes ein spanender Abtrag erfolgt. Das Ergebnis ist dann eine unrunde Kontur.

Die Erfindung schlägt vor, die Werkzeugbaugruppe einer derartigen Drehvorrichtung als Kurbeltrieb derart auszubilden, dass antriebsseitig eine Kurbel, eine sogenannte Exzenterkurbel, verwendet ist, und der Kolben als Schwingkolben ausgebildet ist. Beide sind durch eine Schubstangeneinheit verbunden. Der Kolben schwingt um eine Achse zwischen einem vorderen und einem hinteren Maximum iterierend hin und her. Da der Exzenter einstellbar ist, gegebenenfalls auch die Schubstangeneinheit und zusätzlich unter Umständen auch der Anlenkpunkt der Schubstangeneinheit am Schwingkolben lassen sich somit nahezu beliebige Konturen bearbeiten.

Der erfindungsgemäße Aufbau hat den Vorteil, dass nahezu beliebige Werkstücke an nahezu beliebigen Orten gesteuert und industriell nacharbeitbar mit nahezu beliebigen unrunden Konturen versehen werden können. So können beispielsweise nicht runde Kolben sehr großer Motoren, beispielsweise Schiffsmotoren, an einer beliebigen axialen Stelle außen, stimseitig auch innen bearbeitet werden.

Die Schwingkolbeneinheit umfasst einen um eine Achse schwenkbar gelagerten Kolben, der vorzugsweise als Scheibensegment ausgebildet ist. Allerdings kann der Kolben auch hebelartig ausgebildet sein, Durchbrechungen aufweisen und dergleichen. Der Kolben kann als Masseelement ausgebildet sein. Dies bedeutet, dass er entweder selbst eine große Masse aufweist und/oder mit Masseelementen beladbar ist. Auf diese Weise kann der Kolben auch bei Bearbeitungen eingesetzt werden, bei denen sehr große Kräfte auftreten. Darüber hinaus ist die Steuerung eines derartigen Elementes äußerst präzise. Die erfindungsgemäße Vorrichtung erlaubt die Einhaltung extrem enger Toleranzen.

Die Kurbeleinheit umfasst vorzugweise ein Getriebe, welches die zentral eingeleitete Antriebskraft eines E-Motors in einen exzentrisch rotierenden Abtriebszapfen überträgt. Mit großem Vorteil wird vorgeschlagen, dass die Exzentrizität einstellbar ist, was in der Übertragung bedeutet, dass der Werkzeughub veränderbar ist. Dies wiederum ist ein Maß für die Einschnürung der Polygonflächen, die durch die Bearbeitung erzeugt werden.

In vorteilhafter Weise ist die Schubstangeneinheit verstellbar ausgebildet. So kann sie hinsichtlich ihrer Länge variiert werden. Mit der Erfindung ist auch vorgesehen, dass der Anlenkpunkt der Schubstange am Schwingkolben variabel ist. Die Einstellung ist ein Maß für die sich ergebende Kontur hinsichtlich der Form.

Erfindungsgemäß ist die gesamte Vorrichtung auf einen Schlitten angeordnet, wie dies aus dem Stand der Technik bekannt ist. Derartige Schlitten oder Schlittensysteme ermöglichen eine radiale und/oder axiale Verschiebbarkeit der Baugruppe, so dass kaum Beschränkungen hinsichtlich des Bearbeitungsortes in Bezug auf das Werkstück einzuhalten sind.

Dadurch, dass der Kolben als Schwingkolben ausgebildet ist, der um wenigstens eine Achse hin und her schwingt, ergibt sich eine kurvenförmige Bewegungsbahn der wirksamen Spitze des Schneidwerkzeugs.

Gemäß einem vorteilhaften Vorschlag der Erfindung können die unterschiedlichen Achsen und Lagerpunkte des Trägerkörpers verstellbar sein. So kann eine Drehachse in einer beliebigen Richtung verstellbar sein, beispielsweise radial zum Werkstück, dazu vertikal oder auch eine Neigung erhalten. Ein entsprechender Exzenter kann ebenfalls in gleicher Weise nachgestellt sein. Die Verstellung erfolgt in vorteilhafter Weise so koordiniert, dass das Schneidwerkzeug eine Bewegung auf einer radialen Bahn oder auf einer bezogen auf die Drehachse des Werkstücks bogenförmigen Bahn durchführt, um die gewünschte Kontur zu erzeugen. Im Wesentlichen soll das Werkzeug immer in Richtung der Drehachse des Werkstückes verfahren werden.

Der Exzenterantrieb kann gemäß einem vorteilhaften Vorschlag der Erfindung an dem Trägerkörper über ein Kurbelgetriebe angelenkt sein. Auch die Anlenkpunkte können verstellbar ausgestaltet sein.

Zur Verstellung und zum Antrieb können unterschiedliche, an sich bekannte Technologien unter Verwendung von Elektromotoren, Hydraulikantrieben, elektrischen und hydraulischen Verstelleinheiten mit Spindeln, Schrittmotoren, Wellen und dergleichen eingesetzt werden.

Die Erfindung stellt eine mit überschaubarem wirtschaftlichem Aufwand erstellbare und in Bezug auch auf lange Werkstücke äußerst flexible Vorrichtung zur Erzeugung unrunder Konturen bereit. Diese kann in nahezu jeder beliebigen axialen Position eines Werkstückes eingesetzt werden. Dabei kann für das Werkstück eine für Drehbearbeitung übliche Drehgeschwindigkeit verwendet werden.

In vorteilhafter Weise sind sämtliche Verstellmöglichkeiten sowohl des Exzenters als auch der Schubstange hydraulisch ausgebildet. Dies gilt unter Umständen auch für die unwuchtkompensierende Einheit. Eine Steuerung übernimmt die Aufgabe der Drehzahlanpassung und der Exzentrizität. Wenn beispielsweise die Schwingachse des Schwingkolbens einstellbar ist, kann hier ebenfalls eine Lagereinheit hydraulisch verstellbar ausgebildet sein.

Weitere Vorteile und Merkmale der Erfindung ergeben sich aus der folgenden Beschreibung anhand der Figur.

Dabei zeigt:

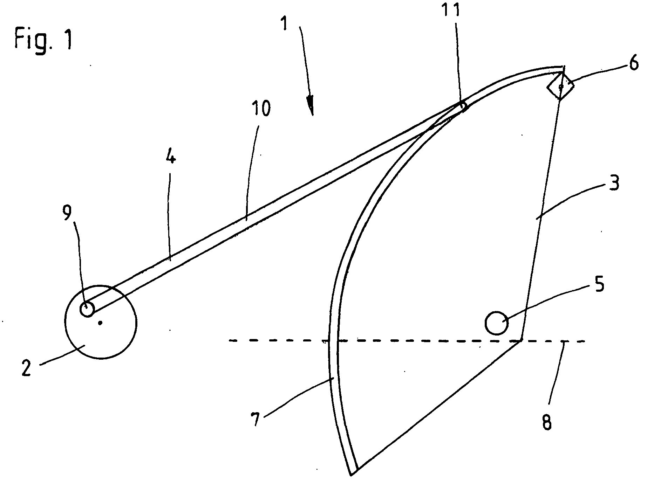

- Fig. 1: eine schematische Darstellung einer Ausführungsform einer erfindungsgemäßen Werkzeugbaugruppe.

Die in Fig. 1 rein schematisch gezeigte Werkzeugbaugruppe 1 umfasst eine Kurbeleinheit 2, eine Schwingkolbeneinheit 3 und eine Schubstangeneinheit 4. Die Schwingkolbeneinheit 3 umfasst einen scheibenförmig ausgebildeten Schwingkolben, der um eine Achse 5 schwingt. An der freien Spitze ist ein Schneidwerkzeug 6 schematisch gezeigt. Im gezeigten Ausführungsbeispiel ist der Kolben 3 als Scheibensegment ausgebildet. Er hat an der Außenkante beispielhaft eine schienenartige Erweiterung. Darüber ist er in einem Gehäuse führbar, indem er, wie durch die Linie 8 angedeutet, in eine entsprechende präzise Führung eingreift.

Die Kurbeleinheit 2 weist einen Exzenter 9 auf, dessen Exzentrizität vorzugsweise einstellbar ist. Zur Verbindung wird die Schubstangeneinheit 4 verwendet, die eine Schubstange 10 umfasst, die vorzugsweise längenverstellbar ausgebildet ist. Der Anlenkpunkt 11 am Schwingkolben 3 ist vorzugsweise ebenfalls variabel.

Das beschriebene Ausführungsbeispiel dient nur der Erläuterung und ist nicht beschränkend.

### Bezugszeichenliste

- 1: Werkzeugbaugruppe
- 2: Kurbeleinheit
- 3: Schwingkolben
- 4: Schubstangeneinheit
- 5: Achse
- 6: Schneidwerkzeug
- 7: Führung
- 8: Eintauchebene
- 9: Exzenter
- 10: Schubstange
- 11: Anlenkpunkt

## Patentansprüche

1. Werkzeugbaugruppe (1) für eine Drehvorrichtung, mit eineAntriebseinrichtung, einer Steuerung und einer Trageinrichtung für wenigstens einen Werkzeugeinsatz, **dadurch gekennzeichnet, dass** die Werkzeugbaugruppe (1) als Kurbeltriebbaugruppe ausgebildet ist, wobei die Trageinrichtung eine Schwingkolbeneinheit (3) und die Antriebseinrichtung eine Kurbeleinheit (2) umfassen und die Schwingkolbeneinheit (3) und die Kurbeleinheit (2) durch eine Schubstangeneinheit (4) miteinander verbunden sind, wobei die Kurbeleinheit (2) eine Getriebeeinheit umfasst, mittels welcher eine zentral rotierend eingeleitete Antriebskraft in eine exzentrisch um das Zentrum rotierende Abtriebseinheit (9) umsetzbar ist.

2. Werkzeugbaugruppe (1) nach Anspruch 1, **dadurch gekennzeichnet, dass** die Schwingkolbeneinheit (3) einen um eine Achse (5) schwenkbar gelagerten Schwingkolben (3) aufweist.

3. Werkzeugbaugruppe (1) nach Anspruch 2, **dadurch gekennzeichnet, dass** der Schwingkolben (3) als Scheibensegment ausgebildet ist.

4. Werkzeugbaugruppe (1) nach einem der Ansprüche 2 oder 3, **dadurch gekennzeichnet, dass** der Schwingkolben (3) als Masseträger ausgebildet ist.

5. Werkzeugbaugruppe (1) nach Anspruch 1, **dadurch gekennzeichnet, dass** die Exzentrizität der Kurbeleinheit (2) einstellbar ist.

6. Werkzeugbaugruppe (1) nach einem der vorhergehenden Ansprüche, **dadurch gekennzeichnet, dass** die Kurbeleinheit (2) eine Baugruppe zur Unwuchtkompensation aufweist.

7. Werkzeugbaugruppe (1) nach Anspruch 6, **dadurch gekennzeichnet, dass** die Baugruppe zur Kompensation von Unwucht wenigstens ein verschiebbares Massenelement aufweist.

8. Werkzeugbaugruppe (1) nach einem der vorhergehenden Ansprüche, **dadurch gekennzeichnet, dass** die Schubstangeneinheit (4) aus mehreren Teilen zusammengesetzt ist.

9. Werkzeugbaugruppe (1) nach einem der vorliegenden Ansprüche, **dadurch gekennzeichnet, dass** der Antriebseinrichtung einen Elektromotor umfasst.

10. Werkzeugbaugruppe (1) nach Anspruch 9, **dadurch gekennzeichnet, dass** die Drehzahl des Elektromotors in Abhängigkeit einer Funktion mit Bezug auf die Drehzahl eines Drehantriebes für ein Werkstück regelbar ist.

11. Werkzeugbaugruppe (1) nach einem der vorhergehenden Ansprüche, **dadurch gekennzeichnet, dass** die Bewegungsbahn eines an den Schwingkolben (3) angeordneten Schneidwerkzeugs (6) kurvenförmig ist.

12. Werkzeugbaugruppe (1) nach einem der vorhergehenden Ansprüche, **dadurch gekennzeichnet, dass** die Schubstangeneinheit (4) längenverstellbar ist.

13. Werkzeugbaugruppe (1) nach einem der vorhergehenden Ansprüche, **dadurch gekennzeichnet, dass** die Werkzeugbaugruppe (1) auf einem radial und/oder axial verstellbaren Schlitten angeordnet ist.

14. Werkzeugbaugruppe (1) nach einem der vorhergehenden Ansprüche, **dadurch gekennzeichnet, dass** der Anlenkpunkt (11) zwischen Schubstangeneinheit (4) und Schwingkolbeneinheit (3) variabel ist.

## Claims

1. A tool assembly (1) for a rotating device, comprising a driving device of a control and a supporting device for at least one tool insert, **characterized in that** the tool assembly (1) is designed as a crank drive assembly, wherein the supporting device comprises a swinging piston unit (3) and the driving device comprises a crank unit (2) and the swinging piston unit (3) and the crank unit (2) are connected to each other by a push rod unit (4), wherein the crank unit (2) includes a gear unit, by means of which a drive force initiated in a centrally rotating manner is translated into an output unit (9) which rotates eccentrically around the center.

2. A tool assembly (1) according to claim 1, **characterized in that** the swinging piston unit (3) comprises a swinging piston (3) which is swivel-mounted around an axis (5).

3. A tool assembly (1) according to claim 2, **characterized in that** the swinging piston is designed as disk segment.

4. A tool assembly (1) according to one of the claims 2 or 3, **characterized in that** the swinging piston (3) is designed as mass carrier.

5. A tool assembly (1) according to claim 1, **characterized in that** the eccentricity of the crank unit (2) can be set.

6. A tool assembly (1) according to one of the preceding claims, **characterized in that** the crank unit (2) comprises an assembly for the balance compensation.

7. A tool assembly (1) according to claim 6, **characterized in that** the assembly for compensating imbalance at least comprises one mass element that can be shifted.

8. A tool assembly (1) according to one of the preceding claims, **characterized in that** the push rod unit (4) is composed of several parts.

9. A tool assembly (1) according to one of the preceding claims, **characterized in that** the driving device includes an electric motor.

10. A tool assembly (1) according to claim 9, **characterized in that** the rotational speed of the electric motor can be set in dependence on a function with respect to the rotational speed of a rotary drive of a workpiece.

11. A tool assembly (1) according to one of the preceding claims, **characterized in that** the path of motion of a cutting tool (6) mounted on the swinging piston (3) is curved.

12. A tool assembly (1) according to one of the preceding claims, **characterized in that** the length of the push rod unit (4) can be adjusted.

13. A tool assembly (1) according to one of the preceding claims, **characterized in that** the tool assembly (1) is arranged on a radially and/or axially adjustable sledge.

14. A tool assembly (1) according to one of the preceding claims, **characterized in that** the linking point (11) between the push rod unit (4) and the swinging piston unit (3) is variable.

## Revendications

1. Module d'outils (1) destiné à un dispositif de tournage, comprenant un dispositif d'entraînement d'une commande et un dispositif de support pour au moins un insert d'outil, **caractérisé en ce que** le module d'outils (1) est configuré comme un module de mécanisme à manivelle, le dispositif de support comprenant une unité à piston oscillant (3) et le dispositif d'entraînement comprenant une unité à manivelle (2) et l'unité à piston oscillant (3) et l'unité à manivelle (2) étant reliées l'une à l'autre par une unité de tige de poussée (4), l'unité à manivelle (2) comprenant une unité d'engrenage, par moyen de laquelle une force d'entraînement entamée de manière tournant centralement peut être traduite en une unité de sortie (9) qui tourne de manière excentrique autour du centre.

2. Module d'outils (1) selon la revendication 1, **caractérisé en ce que** l'unité à piston oscillant (3) comprend un positon oscillant (3) logé de manière pivotant autour d'un axe (5).

3. Module d'outils (1) selon la revendication 2, **caractérisé en ce que** le piston oscillant (3) est configuré comme segment de disque.

4. Module d'outils (1) selon l'une des revendications 2 ou 3, **caractérisé en ce que** le piston oscillant (3) est configuré comme support de masse.

5. Module d'outils (1) selon la revendication 1, **caractérisé en ce que** l'excentricité de l'unité à manivelle (2) est réglable.

6. Module d'outils (1) selon l'une des revendications précédentes, **caractérisé en ce que** l'unité à manivelle (2) comprend un module pour compenser du balourd.

7. Module d'outils (1) selon la revendication 6, **caractérisé en ce que** le module pour compenser du balourd comprend au moins un élément de masse déplaçable.

8. Module d'outils (1) selon l'une des revendications précédentes, **caractérisé en ce que** l'unité de tige de poussée (4) est composée de plusieurs pièces.

9. Module d'outils (1) selon l'une des revendications précédentes, **caractérisé en ce que** le dispositif d'entraînement comprend un moteur électrique.

10. Module d'outils (1) selon la revendication 9, **caractérisé en ce que** la vitesse de rotation du moteur électrique peut être réglée en fonction d'une fonction par rapport à la vitesse de rotation d'un entraînement en rotation d'une pièce à traiter.

11. Module d'outils (1) selon l'une des revendications précédentes, **caractérisé en ce que** la trajectoire d'un outil de coupe (6) disposé sur le piston oscillant (3) est courbée.

12. Module d'outils (1) selon l'une des revendications précédentes, **caractérisé en ce que** la longueur de l'unité de tige de poussée (4) peut être réglée.

13. Module d'outils (1) selon l'une des revendications précédentes, **caractérisé en ce que** le module d'outils (1) est disposé sur un chariot ajustable de manière radiale et/ou axiale.

14. Module d'outils (1) selon l'une des revendications précédentes, **caractérisé en ce que** le point d'articulation (11) entre l'unité de tige de poussée (4) et l'unité à piston oscillant (3) est variable.
